# EUROPEAN PATENT APPLICATION

(11) **EP 3 748 046 A1**
(43) Date of publication of application: **09.12.2020**
(21) Application number: 19305738.7
(22) Date of filing: 07.06.2019
(51) Int. Cl.: C25D 11/08, C25D 11/16, C25D 11/24, C25D 11/26, C25D 11/30, C25D 11/34, B29C 45/14

(54) **METHOD FOR PRODUCING METAL-POLYMER COMPOSITES**

(71) Applicant: ARKEMA FRANCE, 92700 Colombes (FR)
(72) Inventor: YASUDA, Maho, KYOTO, 600-8815 (JP)
(74) Representative: Arkema Patent

(57) **Abstract**

The invention is directed in particular to a method for producing metal-polymer composites which comprise at least one metal part and at least one part made of a polymer composition, said method comprising the steps of:
(i) Treating the surface of at least one metal part at least partially with a solution of triazine thiol derivative to obtain a treated metal surface; and
(ii) Contacting the treated metal surface at least partially with at least one polymer composition so as to obtain a metal-polymer composite,
wherein the polymer composition comprises at least one semi-crystalline polyamide.

The invention is also directed to a metal-polymer composite that comprises at least one part made of a polymer composition and at least one metal part and that is obtainable by said method and to a product comprising said metal-polymer composite. The surface of the at least one metal part may be submitted to an anodization step, prior to, during or after step (i).

## Description

### [Technical Field]

The present application concerns a method for producing metal-polymer composites that comprise a polymer adhered onto a metal surface, metal-polymer composites thus produced and products incorporating such metal-polymer composites.

### [State of the Art]

In modern products, polymers advantageously replace metals, in particular in view of reducing weight. However, some parts still are preferred to be made of metal, notably to ensure better mechanical properties. As a result, products such as mobile phones for instance may incorporate a metal frame, while other parts are made of polymer. Such products may be produced by insert molding.

The manufacture of such composite products can be challenging, in particular because most polymers do not readily adhere to metal. Good adhesion between the two materials is however essential for obtaining a durable and robust product. Also, the adhesion should be preserved despite subsequent production steps such as anodization of the metal surface for decorative purposes.

When the product such as the mobile phone, is to be waterproof, it is further required that the bond between metal and polymer be watertight.

It is known from JP 2298284 A2 to improve adhesion between metal and a resin by modifying the metal surface through anodic oxidation in a solution comprising a triazine thiol derivate and subsequent washing in hot water. Such treatment is known as TRI treatment.

Patent application JP 2001-200374 discloses a method for maintaining the reactivity of a metal surface wherein a reactive compound reacts with or is absorbed by triazine trithiol metal salt formed on a metal surface.

Patent US 8,394,503 B2 discloses a method to improve adhesion of PPS and PBT on copper, wherein the copper surface is treated by an oxidizing agent and optionally further with a triazine thiol derivate.

Patent US 9,683,304 B2 proposes to improve adhesion of thermoplastic resins on aluminum by forming an anodic oxide coating on the metal surface and so as to further reinforce adhesion, to provide an additional anodic coating produced by electrolysis in a solution comprising a triazine trithiol derivative. The method is illustrated by examples using PPS and PBT resin.

However, PPS and PBT are not always best suited to meet the requirements for specific applications, notably in terms of adhesion strength, dielectric constant, warpage and water proofing.

### [Summary of the invention]

The invention thus aims to propose a method for producing metal-polyamide composites with improved adhesion.

The invention also aims to propose a method for producing such composites that have improved properties in terms of dielectric constant and warpage.

The invention further aims to provide a method for producing such composites that resist subsequent treatments such as anodization.

The invention finally also aims to provide a method for producing such composites that have a good waterproofness.

Indeed, the inventors have discovered that metal surfaces submitted to a TRI treatment show greatly improved adhesion to semi-crystalline polyamides, such as long chain semi-crystalline polyamides, and in particular reinforced semi-crystalline polyamides. It was further discovered that such composites have excellent properties in terms of helium leakage and thus ensure a good waterproofness.

Said composites further exhibit good properties in terms of dielectric constant and warpage, which makes them particularly suitable for use in the manufacture of products in the E/E field, for the consumer market and for automobile interiors.

Therefore, a first aspect of the invention is a method for producing metal-polymer composites which comprise at least one metal part and at least one part made of a polymer composition, said method comprising the steps of:
(i) Treating the surface of at least one metal part at least partially with a solution of triazine thiol derivative to obtain a treated metal surface; and
(ii) Contacting the treated metal surface at least partially with at least one polymer composition so as to obtain a metal-polymer composite,
wherein the polymer composition comprises at least one semi-crystalline polyamide.

According to an embodiment of the invention, the semi-crystalline polyamide comprises at least one long chain polyamide, which may notably be selected among the group consisting of PA 410, PA 6, PA 66, PA 46, PA 610, PA 612, PA 614, PA 618, PA 10, PA 11, PA 12, PA 910, PA 912, PA 913, PA 914, PA 915, PA 916, PA 918, PA 936, PA 106, PA 1010, PA 1012, PA 1013, PA 1014, PA 1018, PA 126, PA 1210, PA 1212, PA 1213, PA 1214, PA 1218, PA 614, PA 613, PA 615, PA 616, PA 618, PA MXD6, PA PXD6, PA MXD10, PA PXD10, PA 4T, PA 6T, PA 9T, PA 10T, PA 12T, PA 18T and blends and copolymers thereof.

According to an embodiment of the invention, the polymer composition further comprises reinforcing fillers, which may notably be chosen in the group consisting of glass fibers, milled glass fibers, glass powder, glass beads, glass flakes and their combinations. According to an embodiment of the invention, the polymer composition comprises 10 to 80 wt.%, preferably 20 to 70 wt.%, and in particular 30 to 60 wt.% of reinforcing fillers.

According to an embodiment of the invention, the surface of the at least one metal part is at least partially submitted to an anodization step, prior to, during or after step (i).

According to an embodiment of the invention, the treated metal surface obtained after step (ii) is at least partially submitted to an anodization step.

According to an embodiment of the invention, the contacting step (ii) is carried out by insert molding, co-extrusion or powder coating.

According to an embodiment of the invention, the metal part comprises or consists of a metal chosen among the group consisting of aluminum, iron, copper, titanium, zinc, magnesium, niobium, zirconium, hafnium, tantalum and their alloys.

According to an embodiment of the invention, the triazine thiol derivative is chosen in the group consisting of 1,3,5-triazine-2,4,6-trithiol (F), 1,3,5-triazine-2,4,6-trithiol monosodium salt (FN), 1,3,5-triazine-2,4,6-trithiol-triethanolamine salt (F. TEA), 6-anilino-1,3,5-triazine-2,4-dithiol (AF), 6-anilino-1,3,5-triazine-2,4-dithiol monosodium salt (AN), 6-dibutylamino-1,3,5-triazine-2,4-dithiol (DB), 6-dibutylamino-1,3,5-triazine-2,4-dithiol monosodium salt (DBN), 6-diallylamino-1,3,5-triazine-2,4-dithiol (DA), 6-diallylamino-1,3,5-triazine-2,4-dithiol monosodium salt (DAN), 1,3,5-triazine-2,4,6-trithiol di (tetrabutyl ammonium salt) (F2A), 6-dibutylamino-1,3,5-triazine-2,4-dithiol tetrabutylammonium salt (DBA), 6-dilaurylamino-1,3,5-triazine-2,4-dithiol (DL), 6-dilaurylamino-1,3,5-triazine-2,4-dithiol monosodium salt (DLN), 6-stearylamino-1,3,5-triazine-2,4-dithiol (ST), 6-stearylamino-1,3,5-triazine-2,4-dithiole monopotassium salt (STK), 6-oleylamino-1,3,5-triazine-2,4-dithiol (DL) and 6-oleylamino-1,3,5-triazine-2,4-dithiole monopotassium (OLK).

A second aspect of the invention is a metal-polymer composite that comprises at least one part made of a polymer composition and at least one metal part and that is obtainable by said method. According to an embodiment of the invention, said metal-polymer composite exhibits a helium leak, as measured in the conditions of example 11 of less than 10⁻⁹ Pa m³ s⁻¹.

A third aspect of the invention is a product comprising such a metal-polymer composite, notably chosen among the group consisting of mobile devices such as mobile phones, computers, tablets, smart watches and cameras.

### [Description of embodiments of the invention]

### Definitions

Within the present application, the term **polymer** means a macromolecule composed of molecules of high relative molecular mass, the structure of which essentially comprises the multiple repetition of units derived, actually or conceptually, from molecules of low relative molecular mass. This term encompasses **homopolymers** which derive from a single unit derived from one or more molecules of low relative molecular mass, and also **copolymers** which derive from two or more such units. The different units may be arranged in the copolymer either randomly or in a more regular fashion, such as in form of recurring sequences of units or blocks of units of a certain length.

The term **polyamide** designates a polymer with repeating units linked by amide bonds.

The term **long chain polyamide** is meant to designate a polyamide having, on average, 9 or more, and preferably 10 or more carbon atoms for each nitrogen atom.

The term **semi-crystalline** polymer is understood to mean a polymer whose fusion enthalpy of more than 30 J/g, as measured according to ISO 11357-3 (1999), using differential scanning calorimetry and a heating rate of 20°C/min.

The term **metal-polymer composite** is meant to designate a multiphasic material comprising a polymer phase and a metallic material. Within the present application is in particular meant a material resulting from bonding a metallic piece to a part made of or comprising a polymer composition. The polymer composition comprises one or more polymers and may further comprise other materials such as reinforcement fillers.

According to a first aspect, the invention is directed to a method for producing metal-polymer composites which comprise at least one metal part and at least one part made of a polymer composition comprises the steps of:
(i) Treating the surface of at least one metal part at least partially with a solution of triazine thiol derivative to obtain a treated metal surface; and
(ii) Contacting the treated metal surface at least partially with at least one polymer composition so as to obtain a metal-polymer composite,
wherein the polymer composition comprises at least one semi-crystalline polyamide.

The metal part of the metal-polymer composite may notably comprise or consist of various metals such as notably aluminum, iron, copper, titanium, zinc, magnesium, niobium, zirconium, hafnium, tantalum and their alloys.

According to a particular embodiment, the metal is anodizable. Other metals such as iron or steel may also be used, alone or in combination with those just mentioned.

Step (i) of the method according to the present invention may be carried out by simply contacting the surface of the metal part by a solution of the triazine thiol derivative, for instance by spraying or dip coating.

The solution of the triazine thiol derivative may notably be water based. However, it is also possible to add to the water or replace the water by any other suitable solvent of the derivative.

The triazine thiol derivative is preferably a compound of the general formula (I) below: 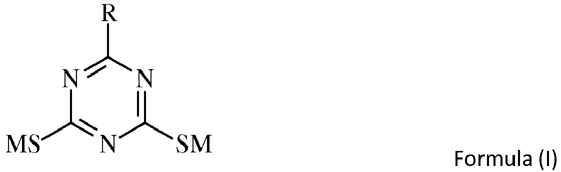 Wherein:
R denotes -OR¹, -SR¹, -NHR¹ or N(R¹)₂;
R¹ denotes hydrogen or an alkyl, alkenyl, phenyl, phenylalkyl, alkylphenyl, or cycloalkyl group; and
M denotes hydrogen, a monovalent metal such as Na, K, Li, K, ½Ba or ½Ca, an aliphatic primary, secondary or tertiary amine, or a quaternary ammonium salt.

Preferably, the triazine thiol derivative is chosen among the group consisting of 1,3,5-triazine-2,4,6-trithiol (F), 1,3,5-triazine-2,4,6-trithiol monosodium salt (FN), 1,3,5-triazine-2,4,6-trithiol triethanolamine salt (F. TEA), 6-anilino-1,3,5-triazine-2,4-dithiol (AF), 6-anilino-1,3,5-triazine-2,4-dithiol monosodium salt (AN), 6-dibutylamino-1,3,5-triazine-2,4-dithiol (DB), 6-dibutylamino-1,3,5-triazine-2,4-dithiol monosodium salt (DBN), 6-diallylamino-1,3,5-triazine-2,4-dithiol (DA), 6-diallylamino-1,3,5-triazine-2,4-dithiol monosodium salt (DAN), 1,3,5-triazine-2,4,6-trithiol di (tetrabutyl ammonium salt) (F2A), 6-dibutylamino-1,3,5-triazine-2,4-dithiol tetrabutylammonium salt (DBA), 6-dilaurylamino-1,3,5-triazine-2,4-dithiol (DL), 6-dilaurylamino-1,3,5-triazine-2,4-dithiol monosodium salt (DLN), 6-stearylamino-1,3,5-triazine-2,4-dithiol (ST), 6-stearylamino-1,3,5-triazine-2,4-dithiole monopotassium salt (STK), 6-oleylamino-1,3,5-triazine-2,4-dithiol (DL) and 6-oleylamino-1,3,5-triazine-2,4-dithiole monopotassium (OLK).

Particularly preferred are triazine trithiol derivatives such as 1,3,5-triazine-2,4,6-trithiol (F), 1,3,5-triazine-2,4,6-trithiol monosodium salt (FN), 1,3,5-triazine-2,4,6-trithiol triethanolamine salt (F. TEA) and 1,3,5-triazine-2,4,6-trithiol di (tetrabutyl ammonium salt) (F2A).

Such compounds may form a covalent bond with a terminal function group of the polymer contained in the polymer composition, for instance by reaction of the thiol group with a terminal amine group of a polyamide. Such covalent bonds enhance the adhesion between the polymer and the metal.

The solution used preferably comprises at least 0.001 wt.% of triazine thiol derivative. A quantity below this content is likely not to produce any substantial effect on the adhesion between metal and polymer composition. Furthermore, the electrolytic solution preferably comprises not more than 20 wt.% of triazine thiol derivative. Indeed, a concentration above this value may not lead to a homogeneous layer on the metal surface. The solution may further comprise one or more additives. Particularly preferred is a solution comprising 0.001 to 10 wt.%, and in particular 0.01 to 5 wt.% of triazine thiol derivative.

According to a preferred embodiment, the metal surface is treated by an anodization step in presence of said triazine thiol derivative. Such treatment is known in the art and notably disclosed in JP 2298284A2 or JP3823189B2

The treatment leads to the formation of an oxide film on the metal surface which contains the triazine thiol derivative.

Anodization designates the electrolytic passivation process used to increase the thickness of the natural oxide layer on the surface of metal parts. The process is called anodizing because the part to be treated forms the anode electrode of an electrolytic cell.

Anodizing changes the microscopic texture of the surface and the crystal structure of the metal near the surface. Thick coatings are normally porous, so a sealing process is often needed to achieve corrosion resistance. Anodized aluminum surfaces, for example, are harder than aluminum but have low to moderate wear resistance that can be improved with increasing thickness or by applying suitable sealing substances.

Anodic films can also be used for a cosmetic effects, either with thick porous coatings that can absorb dyes or with thin transparent coatings that add interference effects to reflected light.

Anodization may be conducted by immersing the metal in an electrolytic solution, connecting it to a cathode, and to apply a specific voltage between the two electrodes for a predetermined time. The cathode may be for instance a plate made of platinum, titanium or carbon.

The electrolytic solution may notably comprise water and one or more water soluble ionic compounds, notably mineral or organic acids, bases or salts. Preferred electrolytic solutions comprise further to water sulfuric acid, nitric acid or phosphoric acid.

According to a preferred embodiment, the anodization step is conducted in an electrolytic solution which contains a triazine thiol derivative. The triazine thiol derivative is preferably a compound of the general formula (I) above.

The anodization step is generally conducted upon applying a voltage between cathode and the metal part serving as an anode. The voltage to be applied can vary notably depending on the nature and concentration of the electrolytic solution and the size, form and nature of the metal part and the cathode. However, satisfactory results are generally obtained when the voltage applied is set between 0.1 and 30 V, preferably between 1 and 20 V and in particular between 2 and 8 V.

Temperature and duration of the anodization step can be varied so as to obtain an anodized film that has the required thickness. A thickness of the anodization layer of 1 to 50, preferably 5 to 30 and in particular between 10 and 20 microns is generally adapted to improve the adhesion between the metal and polymer composition.

Preferably, the treated metal surface is cleaned after having been contacting with the triazine thiol derivative, for instance by washing with a suitable solvent such as water. The cleaned treated metal surface may then be dried by any conventional means such as air blowing.

The method according to the invention further comprises a step (ii) of contacting the treated metal surface at least partially with a polymer composition so as to obtain a metal-polymer composite.

According to the invention, the polymer composition comprises at least one a semi-crystalline polyamide.

Useful semi-cristalline polyamides may be notably aliphatic, cycloaliphatic or semi-aromatic polyamides.

The semi-crystalline polyamide may be chosen notably from: PA 410, PA 6, PA 66, PA 46, PA 610, PA 612, PA 614, PA 618, PA 10, PA 11, PA 12, PA 910, PA 912, PA 913, PA 914, PA 915, PA 916, PA 918, PA 936, PA 106, PA 1010, PA 1012, PA 1013, PA 1014, PA 1018, PA 126, PA 1210, PA 1212, PA 1213, PA 1214, PA 1218, PA 614, PA 613, PA 615, PA 616, PA 618, PA MXD6, PA PXD6, PA MXD10, PA PXD10, PA 4T, PA 6T, PA 9T, PA 10T, PA 12T, PA 18T and blends and copolymers thereof.

Particularly preferred semi-crystalline polyamides have, on average, 8 or more, 9 or more carbon atoms and especially 10 or more carbon atoms per nitrogen atom. Such semi-crystalline polyamides may be selected among PA 610, PA 612, PA 614, PA 618, PA 10, PA 11, PA 12, PA 910, PA 912, PA 913, PA 914, PA 915, PA 916, PA 918, PA 936, PA 106, PA 1010, PA 1012, PA 1013, PA 1014, PA 1018, PA 126, PA 1210, PA 1212, PA 1213, PA 1214, PA 1218, PA 613, PA 614, PA 615, PA 616, PA 618, PA MXD10, PA PXD10, PA 10T, PA 12T, PA 18T, and blends and copolymers thereof.

Semi-crystalline copolyamides are also suitable for carrying out the invention. They may be selected notably among PA 10/11, PA 10/12, PA 11/12, PA 6/10, PA 6/12, PA 6/9, PA 8/10, PA 11/10T, PA 12/10T, PA 66/6, PA 4T/4I, PA 4T/6I, PA 5T/5I, PA 6T/66, PA 6/6T/6I, PA 66/6T/6I, PA 6T/6I and PA 6/6T PA 6T/610, PA 6T/612, PA 6T/9T, PA 6T/10T, PA 6T/12T, PA 6T/6I/12, PA 6T/6I/11, PA 6T/6I/6, PA 6T/6I/10T, PA 10T/106, PA 10T/10I, PA 10T/612, PA 10T/1010, PA 10T/1012 and mixtures thereof.

Particularly preferred polyamides and copolyamides are PA 1010, PA 1012, PA 610, PA MXD10, PA 11, PA 12, PA 12/10T, PA 11/10T and mixtures thereof.

The polymer composition may further comprise minor amounts of other polymers such as functionalized polyolefins. However, such additional polymers will be present in an amount of less than 30 wt.%, in particular less than 20 wt.% and in particular less than 10 wt.% with respect to the total polymer composition.

The polymer composition may also comprise one or more reinforcing fillers. Such reinforcing fillers are particles added to improve the mechanical properties of a material.

Preferred reinforcing fillers may be notably in form of a powder, beads, fibers, milled fibers or flakes. They may be made of massive material and may be hollow so save weight.

The reinforcing fillers may be made of various materials, notably glass, carbon, mineral oxides such as talc, silica or titanium dioxide, or polymers such as aramids. Preferred reinforcing fibers within the present invention are made of glass or carbon.

Particularly preferred are reinforcing fillers chosen from glass fibers, milled glass fibers, glass powder, glass beads, glass flakes and their combinations.

The diameter of the fibers is preferably from 5 to 50 µm, preferably from 10 to 45 µm. The diameter of the fiber and the length to diameter ratio of the milled fiber are preferably from 5 to 50 µm and from 2 to 150, respectively. The average size of powder particles is preferably from 1 to 100 µm. The size of beads is preferably from 5 to 300 µm. The thickness of flakes is preferably from 0.1 to 10 µm. Particle size is determined according to ISO 13320-1 :2009.

Several reinforcing fillers can be used in combination.

Advantageously, the reinforcing fillers may be surface-treated with a coupling agent in order to increase the affinity and the adhesion between the polymer and the reinforcing filler. Mention may be made, as coupling agent, of those based on silane, on borane, on aluminates, those of titanate type, and the like. In particular, the silane coupling agents are preferred as they make possible good adhesion between the amorphous polyamide resin and the glass filler. Use may be made, as coupling agent of silane type, of aminosilane, epoxysilane and acrylsilane coupling agents and the like. Among silane coupling agents, aminosilane coupling agents are preferred.

In addition, the treatment of the fillers can optionally comprise film-forming agents, lubricating agents, antistatic agents and the like, in addition to the coupling agent. These components can be used alone or in combination. Mention may be made, as examples of film-forming agent, of vinyl acetate, urethane, acrylic, polyester, polyether, phenoxy, polyamide and epoxy resins and/or the like. Mention may be made, as examples of lubricating agent, of aliphatic ester, aliphatic ether, aromatic ester or aromatic ether surface-active agents. Mention may be made, as examples of antistatic agent, of inorganic salts, such as lithium chloride or potassium iodide, and also quaternary ammonium salts, such as ammonium chloride or ammonium ethosulfate.

In the present invention, the content of reinforcing filler in the polyamide composition is preferably from 5 to 80% by weight, in particular from 10 to 70%, preferably from 20 to 60% by weight, and notably from 30 to 50% by weight, with respect to the total weight of the polymer composition.

The polymer composition may, further to the reinforcing filler, also comprise one or more other additives and transformation aids such as colouring agents, in particular pigments, dyes, effect pigments, such as diffractive pigments, interference pigments, such as pearlescent agents, reflective pigments and mixtures thereof; stabilizers, notably UV stabilizers; anti-ageing agents; antioxidants; fluidizing agents; anti-abrasion agents; mould-release agents; plasticizers; impact modifiers; surfactants; brighteners; waxes and mixtures thereof, and/or any other additive well known in the field of polymers.

The polymer composition preferably comprises from 0 to 30 wt.%, advantageously 1 to 20 wt.% and in particular 5 to 10 wt.% of such additives, with respect to the total weight of the polymer composition.

Step (ii) of the method according to the present invention may advantageously be carried out by conventional polymer transformation techniques such as insert molding, co-extrusion or powder coating.

The term insert molding designates a process wherein a polymer composition is injected into a mold which contains a pre-placed part, also called an insert, often made of metal. The result of insert molding is a single molded piece with the insert surrounded by the polymer composition. Applications of insert molding include insert-molded couplings, threaded fasteners, filters and electrical components. Such process is conventional and can be carried out using specific machines that exist on the market.

According to a second aspect, the invention is directed to a product comprising a metal-polymer composite obtainable according to the method as described above.

The high adhesion strength, low Dk, low warpage and high waterproofness makes such composites particularly attractive for the manufacture of parts for mobile devices such as mobile phones, computers, tablets, smart watches, and cameras and more generally, for waterproof devices.

The invention will be explained more in detail by way of the following examples.

### [EXAMPLES]

### Examples 1 to 3 and Comparative Examples 1 to 5: Adhesion of non-reinforced polymers on metal pieces treated according to TRI technology

Sample bars made of aluminum (A-1050) were treated by TRI technology as detailed below and subsequently sealed in vacuumed bags to avoid moisture pick up.
(1) Immerse aluminum bars for 1 min in a solution of 5wt.% aluminum hydroxide in water heated to 42°C (alkaline etching);
(2) Immerse aluminum bars subsequently for 2 min in an aqueous solution of 10mL/L sulfuric acid heated to 40°C (neutralization);
(3) Immerse aluminum bars for 75 min in an electrodeposition bath equipped with a platinum plate acting as an cathode and filled with an aqueous solution of 0.003 wt.% 1,3,5-triazine-2,4,6-trithiol monosodium salt and 2.3 wt.% sulfuric acid heated to 60°C while applying a voltage of around 2.7 V, suitable for forming on the aluminum surface an anodic oxide film comprising alumina and the triazine thiol derivative; and
(4) Wash bars with hot water, and
(5) Dry bars for 4 min in hot air (80°C).

The treated bars were then used for injection molding using different polymers. Injection molding was carried out in a Nissei TNS50 RE5VE vertical injection machine, having a maximum clamping force of 50 ton and a screw diameter of 22mm and using an injection pressure of 179MPa, an injection speed of 10% and an injection time of 10 seconds.

Table 1 below resumes the different polymers and polymer compositions used and the results obtained in terms of adhesion. Table 2 below resumes the process parameters used for each polymer.

**Table 1: Polymer composition**

| Example | Polymer | Quality of adhesion |
|---|---|---|
| 1 | PA 1010 | Good |
| 2 | PA 610 | Good |
| 3 | MXD10* | Excellent |
| C1 | Amorphous polyamide | Poor (separation during ejection) |
| C2 | 95 wt.% amorphous polyamide + 5wt. % copolyamide A (dry blended) | Some |
| C3 | 95 wt.% amorphous polyamide + 5wt. % copolyamide B (dry blended) | Some |
| C4 | 95 wt.% amorphous polyamide + 5wt. % copolyamide C (dry blended) | Poor |
| C5 | Polyphenylene sulfide (PPS) | Excellent |

| | | |
|---|---|---|
| *Formulation with nucleating agent | | |

**Table 2: Process parameters**

| Ex | Thermal conditions [°C] (Nozzle)---- [Hopper, Water cooled) | Mold temperature [°C] | Screw rotation [rpm] | Holding pressure [MPa] | Cooling time [s] |
|---|---|---|---|---|---|
| 1 | 250-250-240-240-230-220-40 | 100* | 100 | 3 | 60 |
| 2 | 280-270-260-250-240-40 | 100* | 100 | 2.5 | 40 |
| 3 | 280-270-260-250-240-40 | 120** | 100 | 6.5 | 40 |
| C1 | 280-270-260-250-240-40 | 100* | 100 | 7 | 40 |
| C2 | 280-270-260-250-240-40 | 100* | 100 | 7 | 40 |
| C3 | 280-270-260-250-240-40 | 100* | 100 | 2.5 | 40 |
| C4 | 280-270-260-250-240-40 | 100* | 100 | 7 | 40 |
| C5 | 310 | 140* | 100 | 7 | 40 |

| | | | | | |
|---|---|---|---|---|---|
| * Aluminum bars: 96°C ** Aluminum bars: 110°C | | | | | |

### Effect of anodization on tensile strength

So as to evaluate the resistance of the metal-polymer bond to subsequent anodization, the adhesion strength of the samples made according to the previous examples was measured before and after subsequent anodization of the metal surface.

The anodizing process was conducted with a target thickness of 10 µm for the oxidized layer using the following protocol :
1. Immersion in 10 wt.% NaOH aq. solution at 60°C for 30 sec
2. Washing in water
3. Immersion in 15 wt.% H₂SO₄ aq. solution at 20°C for 30 sec
4. Washing in water
5. Anodizing in H₂SO₄ aq. solution (150g/L) at 20°C for 34 min (1.0 A/dm²)
6. Washing in water
7. Treatment in sealing additives (Nickel acetate aqueous solution at 13 g/L) at 90°C for 20 min
8. Washing in water
9. Drying by hot air

Tensile strength was measured to evaluate adhesion strength of the composite before and after anodizing with a Precision Automatic Tester (SHIMADZU Autograph AGS-X), according to IS 527 using a speed of 5 mm/min and a grip span of 50 mm. The results are summarized in Table 3 below.

The tensile strength measurements show that insert molded samples of Comparative Examples 1 to 4 break at the interface between the metal and the polyamide. In contrast, samples of Examples 1 to 3, comprising semi-crystalline polymers, break cohesively. The adhesive strength measured for the composites comprising semi-crystalline polymers is further much higher. The results thus indicate that semi-crystalline polyamides adhere better to TRI treated aluminum than amorphous polyamides.

In addition, it is observed that in the cohesive failure mode, the adhesion strength appears to be proportional to the yield strength of each polymer.

The measurements carried out on the anodized samples further show that the adhesion strength was essentially maintained for the samples of Examples 1 and 3. The fact it decreased by about half for the sample of Example 2 is believed be linked to a higher sensitivity of PA 610 to the anodization process, notably to the immersion into basic and acidic solution.

Accordingly, the adhesion strength of composites comprising long chain polyamides resists better to subsequent anodization.

**Table 3: Adhesion strength before and after anodization**

| Ex | Polymer | Initial adhesion strength [MPa] | Adhesion strength anodization [MPa] | Retention [%] | Yield strength [MPa] | Break mode |
|---|---|---|---|---|---|---|
| 1 | PA 1010 | 11 | 9.6 | 87 | 46 | cohesive |
| 2 | PA 610 | 8.5 | 4 | 47 | 52 | cohesive |
| 3 | MXD.10* | 46 | 44.8 | 97 | 230 | cohesive |
| C1 | Amorphous polyamide | 0.3 | - | | 52 | interfacial |
| C2 | 95 wt.% amorphous polyamide + 5wt. % Copolyamide A (dry blended) | 0.8 | N.D. (broken) | | | interfacial |
| C3 | 95 wt.% amorphous polyamide + 5wt. % Copolyamide B (dry blended) | 0.7 | - | | | interfacial |
| C4 | 95 wt.% amorphous polyamide + 5wt. % Copolyamide C (dry blended) | 0.4 | - | | | interfacial |
| C5 | Polyphenylene sulfide (PPS) | 30-40 | 24.9 | 62-83 | | cohesive |

| | | | | | | |
|---|---|---|---|---|---|---|
| * Formulation with nucleating agent | | | | | | |

### Examples 4 to 10 and Comparative Example 6: Adhesion of reinforced polymers on metal pieces treated according to TRI technology

Samples were injection molded as explained in example 1, but using the filler reinforced polymer compositions as detailed in table 4 below. The injection pressure was 650kg/cm², an injection speed of 10% and an injection time of 6 seconds. Table 5 below resumes the process parameters used for each polymer.

**Table 4: Filler reinforced Polymers**

| Example | Polymer | Reinforcement filler | quantity of filler [wt.%] |
|---|---|---|---|
| 4 | PA11 | Glass fiber | 30 |
| 5 | PA1010 + MXD10 (weight ratio 1010/MXD10 = 70/30) | Glass fiber | 60 |
| 6 | MXD10* | Glass fiber | 50 |
| 7 | PA11/10T | Glass fiber | 0 |
| 8 | PA11/10T | Glass fiber | 30 |
| 9 | PA11/10T | Glass fiber | 50 |
| 10 | MXD10* | Glass fiber | 30 |
| C6 | PBT (polybutyleneterephtalate) (Toraycon 1101G-X54, natural color from Toray) | Glass fiber | 30 |

| | | | |
|---|---|---|---|
| * Formulation with nucleating agent | | | |

**Table 5: Process parameters**

| Ex | Thermal conditions [°C] Mold (Nozzle)---- [Hopper) | Mold temperature [°C] | Holding pressure [MPa] | Cooling time [s] |
|---|---|---|---|---|
| 4 | 290-280-270-260-250-40 | 120* | 80 | 40 |
| 5 | 290-280-270-260-250-40 | 120* | 80 | 40 |
| 6 | 290-280-270-260-250-40 | 120* | 80 | 40 |
| 7 | 300-295-290-280-270-40 | 120* | 65 | 40 |
| 8 | 300-295-290-280-270-40 | 120* | 80 | 40 |
| 9 | 300-295-290-280-270-40 | 120* | 80 | 40 |
| 10 | 260-250-245-240-230-40 | 130* | 70 | 40 |
| C6 | 260-250-245-240-230-40 | 130 | 70 | 40 |

| | | | | |
|---|---|---|---|---|
| *Aluminum bars: 110°C | | | | |

The tensile strength of the samples of metal-reinforced polymer composite produced was measured as described in Example 1. Table 6 below presents the results.

### Effect of anodization on adhesive strength

So as to evaluate the resistance of the metal-polymer bond in the composite to subsequent anodization, the adhesion strength of the samples made according to Examples 4 to 10 and C6 was evaluated before and after anodization of the metal surface.

The anodizing process was conducted as explained in the preceding Examples.

Adhesion strength of the samples was measured before and after anodizing with a Precision Automatic Tester (SHIMADZU Autograph AGS-X), using a speed of 5 mm/min and a grip span of 50 mm. Yield strength was measured according to ISO 527. The results are summarized in Table 6 below.

**Table 6: Adhesion strength before and after anodization**

| Ex | MVR (2.16kg,cm³/10min) | Adhesion strength before anodization [MPa] | Yield (max) strength TDS [MPa] | Adhesion strength/yield [%] | Adhesion strength after anodizing [%] |
|---|---|---|---|---|---|
| 4 | 8 (235°C) | 28.4 | 112 | 25.4 | 13.7 |
| 5 | 12 (235°C) | 57.3 | 198 | 28.9 | 54.4 |
| 6 | 9 (250°C) | 63.3 | 230 | 27.5 | 56.2 |
| 7 | 10 (255°C) | 9.4 | 64 | 14.7 | peeled off |
| 8 | 15 (300°C) | 22.3 | 130 | 17.2 | 9.9 |
| 9 | | 23.0 | 200 | 11.5 | 5-28 |
| 10 | | 59 | N.D. | N.D. | 55 |
| C6 | | 35 | N.D. | N.D. | 0.8-13.6 |

The results show that overall, the adhesion strength of insert molded samples comprising reinforced polymers is proportional to the yield or maximum strength of the polymer. The different behavior shown by the sample according to example 7 as an exception to this rule is believed to be due to another factor, such as the high viscosity of the resin.

The results indicate that metal-polymer composites comprising reinforced semi-crystalline polyamide resist better to subsequent anodization compared to such composites comprising conventionally used polybutylene terephtalate.

### Examples 11 to 13 and Comparative Example 7 Waterproofness

The tightness of the bond in the polymer-metal composites was evaluated by spraying helium gas on the samples under vacuum and measuring the quantity of helium leaking through the composite, as described in ISO 19095-3:2015 Part 3.

First, samples of metal-polymer composites were produced using a center gate mold for insert molding into an aluminum frame (sample type D according to IS 19095-2, TRI treated, 2mm in thickness). The polymer compositions used are resumed in Table 7 below and the process parameters are given in Table 8 below.

**Table 7: Polymers**

| Example | Polymer | Reinforcement filler | quantity of filler [wt.%] |
|---|---|---|---|
| 11 | MXD10* | Glass fiber | 30 |
| 12 | MXD10* | Glass fiber | 50 |
| 13 | PA1010 + MXD10 (weight ratio 1010/MXD10 = 70/30) | Glass fiber | 60 |
| C7 | PBT (polybutyleneterephtalate) (Toraycon 1101G-X54, natural color from Toray) | Glass fiber | 30 |

| | | | |
|---|---|---|---|
| * Formulation with nucleating agent | | | |

**Table 8: Process parameters**

| Ex | Thermal conditions [°C] Cylinder | Mold temperatire [°C] | Injection speed [%] | Injection pressure [MPa] | Holding pressure [MPa] | Injection time [s] | Cooling time [s] |
|---|---|---|---|---|---|---|---|
| 11 | 250-260-270-280 | 120* | 20 | 105 | 53 | 10 | 40 |
| 12 | 240-260-270-280 | 120* | 20 | 105 | 53 | 10 | 20 |
| 13 | 240-260-270-280 | 120* | 20 | 105 | 53 | 10 | 20 |
| C7 | 240-245-250-260 | 130* | 20 | 105 | 42 | 10 | 20 |

| | | | | | | | |
|---|---|---|---|---|---|---|---|
| * Aluminum frame : 110°C | | | | | | | |

The helium leakage through the obtained samples was then evaluated using a Helium Leak Detector (HELEN212LD commercialized by Canon-Anelva). Tests were realized on ten samples respectively and the result is given in table 8 below as the arithmetic mean value.

**Table 8: Helium leakage**

| Ex | Polymer | Glass Fiber content | Leakage rate [Pa m³ s⁻¹] |
|---|---|---|---|
| 11 | MXD10* | 30 | 1.5 10¹⁰ |
| 12 | MXD10* | 50 | 1.410¹⁰ |
| 13 | PA1010 + MXD10 (weight ratio 1010/MXD10 = 70/30) | 60 | 1.310¹⁰ |
| C7 | PBT (polybutyleneterephtalate) | 30 | 5.0 10⁻¹⁰** |

| | | | |
|---|---|---|---|
| *Formulation with nucleating agent ** 8 of 10 samples failed the test | | | |

The results show that the samples of examples 11, 12 and 13, comprising a polyamide composition, all performed better in terms of waterproofness compared to the sample of example C7 that comprises conventionally used PBT.

In conclusion, the TRI treatment on the metal piece significantly increases adhesion of semicrystalline polyamides by insert molding, especially long chain polyamides and in particular highly reinforced products. The leakage test confirmed the excellent waterproofness of composites using polyamides, even better than PBT which is largely used today. Polyamide composites further exhibit a lower Dk and lower warpage compared to PBT based composites, which makes them highly suitable for the manufacture of portable electronic products such as mobile phones.

### [List of cited documents]

JP 2298284 A2
JP 2001-200374
US 8,394,503 B2
US 9,683,304 B2

## Claims

1. A method for producing metal-polymer composites which comprise at least one metal part and at least one part made of a polymer composition, said method comprising the steps of:
(i) Treating the surface of at least one metal part at least partially with a solution of triazine thiol derivative to obtain a treated metal surface; and
(ii) Contacting the treated metal surface at least partially with at least one polymer composition so as to obtain a metal-polymer composite,
wherein the polymer composition comprises at least one semi-crystalline polyamide.

2. Method for producing metal-polymer composites according to claim 1, wherein the semi-crystalline polyamide comprises at least one long chain polyamide.

3. Method for producing metal-polymer composites according to claim 1 or 2, wherein the at least one semi-crystalline polyamide is selected among the group consisting of PA 410, PA 6, PA 66, PA 46, PA 610, PA 612, PA 614, PA 618, PA 10, PA 11, PA 12, PA 910, PA 912, PA 913, PA 914, PA 915, PA 916, PA 918, PA 936, PA 106, PA 1010, PA 1012, PA 1013, PA 1014, PA 1018, PA 126, PA 1210, PA 1212, PA 1213, PA 1214, PA 1218, PA 614, PA 613, PA 615, PA 616, PA 618, PA MXD6, PA PXD6, PA MXD10, PA PXD10, PA 4T, PA 6T, PA 9T, PA 10T, PA 12T, PA 18T and blends and copolymers thereof.

4. Method for producing metal-polymer composites according to any of claims 1 to 3, wherein the polymer composition further comprises reinforcing fillers.

5. Method for producing metal-polymer composites according to claim 4, wherein the reinforcing fillers are chosen in the group consisting of glass fibers, milled glass fibers, glass powder, glass beads, glass flakes and their combinations.

6. Method for producing metal-polymer composites according to claim 4 or 5, wherein the polymer composition comprises 10 to 80 wt.%, preferably 20 to 70 wt.%, and in particular 30 to 60 wt.% of reinforcing fillers.

7. Method for producing metal-polymer composites according to any of claims 1 to 6, wherein the surface of the at least one metal part is at least partially submitted to an anodization step, prior to, during or after step (i).

8. Method for producing metal-polymer composites according to any of claims 1 to 7, wherein the treated metal surface obtained after step (ii) is at least partially submitted to an anodization step.

9. Method for producing metal-polymer composites according to any of claims 1 to 8, wherein the contacting step (ii) is carried out by insert molding, co-extrusion or powder coating.

10. Method for producing metal-polymer composites according to any of claims 1 to 9, wherein the metal part comprises or consists of a metal chosen among the group consisting of aluminum, iron, copper, titanium, zinc, magnesium, niobium, zirconium, hafnium, tantalum and their alloys.

11. Method for producing metal-polymer composites according to any of claims 1 to 10, wherein the triazine thiol derivative is chosen in the group consisting of 1,3,5-triazine-2,4,6-trithiol (F), 1,3,5-triazine-2,4,6-trithiol monosodium salt (FN), 1,3,5-triazine-2,4,6-trithiol-triethanolamine salt (F. TEA), 6-anilino-1,3,5-triazine-2,4-dithiol (AF), 6-anilino-1,3,5-triazine-2,4-dithiol monosodium salt (AN), 6-dibutylamino-1,3,5-triazine-2,4-dithiol (DB), 6-dibutylamino-1,3,5-triazine-2,4-dithiol monosodium salt (DBN), 6-diallylamino-1,3,5-triazine-2,4-dithiol (DA), 6-diallylamino-1,3,5-triazine-2,4-dithiol monosodium salt (DAN), 1,3,5-triazine-2,4,6-trithiol di (tetrabutyl ammonium salt) (F2A), 6-dibutylamino-1,3,5-triazine-2,4-dithiol tetrabutylammonium salt (DBA), 6-dilaurylamino-1,3,5-triazine-2,4-dithiol (DL), 6-dilaurylamino-1,3,5-triazine-2,4-dithiol monosodium salt (DLN), 6-stearylamino-1,3,5-triazine-2,4-dithiol (ST), 6-stearylamino-1,3,5-triazine-2,4-dithiole monopotassium salt (STK), 6-oleylamino-1,3,5-triazine-2,4-dithiol (DL) and 6-oleylamino-1,3,5-triazine-2,4-dithiole monopotassium (OLK).

12. A metal-polymer composite that comprises at least one part made of a polymer composition and at least one metal part and that is obtainable by the method according to any of claims 1 to 11.

13. Metal-polymer composite according to claim 12, which exhibits a helium leak, as measured in the conditions of example 11 of less than 10⁻⁹ Pa m³ s⁻¹.

14. Product comprising a metal-polymer composite according to claim 12 or 13.

15. Product according to claim 14, chosen among the group consisting of mobile phones, computers, tablets, smart watches and cameras.
